## Europäisches Patentamt
## European Patent Office
## Office européen des brevets

(19)

(11) Veröffentlichungsnummer: **0 043 502**
**A2**

(12) # EUROPÄISCHE PATENTANMELDUNG

(21) Anmeldenummer: **81104884.2**

(22) Anmeldetag: **24.06.81**

(51) Int. Cl.³: **C 08 G 63/22**

(30) Priorität: **05.07.80 DE 3025574**

(43) Veröffentlichungstag der Anmeldung: **13.01.82**
**Patentblatt 82/2**

(84) Benannte Vertragsstaaten: **DE FR GB IT NL**

(71) Anmelder: **BAYER AG, Zentralbereich Patente, Marken und Lizenzen, D-5090 Leverkusen 1, Bayerwerk (DE)**

(72) Erfinder: **Muschelknautz, Edgar, Dr. Prof.,**
**Carl-Rumpff-Strasse 33, D-5090 Leverkusen (DE)**
Erfinder: **Vogelsgesang, Roland, Dr., Florastrasse 4,**
**D-5090 Leverkusen 3 (DE)**
Erfinder: **Ohse, Helmut, Dr., Lessingstrasse 10,**
**D-4047 Dormagen 1 (DE)**
Erfinder: **Westermann, Hans, Dr., Holsteiner Strasse 9,**
**D-4370 Marl (DE)**
Erfinder: **Möller, Eckhard, Dr., Leverkusener Strasse 29,**
**D-4370 Marl (DE)**
Erfinder: **Hachmann, Klaus, Dipl.-Ing., Kampstrasse 94,**
**D-4370 Marl (DE)**
Erfinder: **Schiemann, Wilhelm, Ing. grad.,**
**Hülsstrasse 105, D-4370 Marl (DE)**
Erfinder: **Kesper, Bernt, Dr., Barkenberger Allee 164,**
**D-4270 Dorsten 11 (DE)**

(54) **Verfahren zur Herstellung von Polyestern.**

(57) Bei der Herstellung von Polyestern aus einer Umesterung oder Veresterung stammenden Vorkondensaten in einem Kolonnenreaktor wurden hinsichtlich Produktqualität und Standzeit des Reaktors Verbesserungen dadurch erzielt, daß die spontane Entspannungsverdampfung des Vorkondensates im sogenannten Zyklon 7 mit Zyklonringkammer (9), Tauchrohr (10), Spritzkragen (11) sowie Abrißkante (12) erfolgt, wobei (13) die schräge Ablauffläche mit Abschirmkegel (14) und den durch eine Ablauftasse (15) geschützten Produktaustritt (16) bezeichnet und der Zyklon oberhalb des obersten Bodens (3) einer Bodenkolonne angebracht ist, und daß im Drallabscheider (8), bestehend aus einem mit Schaufeln (17) bestückten Leitapparat (18), der über ein Rohrstück (19) mit dem Drallrohr (20) verbunden ist, an dessen anderem Ende sich der Schälkragen (21), der Abscheidekasten (22) und das dem mit einer Ablauftasse (23) verbundene Ablaufrohr (24) befinden, eine Separierung der Flüssigkeitskomponente von der Gaskomponente durch Zentrifugalkraft erfolgt.

EP 0 043 502 A2

0043502

- 1 -

BAYER AKTIENGESLLSCHAFT          5090 Leverkusen, Bayerwerk

Zentralbereich

Patente, Marken und Lizenzen   Jo/kl/Fr


Verfahren zur Herstellung von Polyestern


Die Erfindung betrifft ein Verfahren zur Herstellung von Polyestern durch Eintragen von aus einer Umesterung von Dicarbonsäuredialkylestern mit Diolen oder aus einer Veresterung von Dicarbonsäuren mit Diolen, gegebenenfalls unter Zusatz von Katalysatoren, stammenden Vorkondensaten auf den 1. Boden eines Kolonnenreaktors und weiteren Kondensation im Kolonnenreaktor mittels einer geeigneten Vorrichtung, die für einen kontrollierten Ablauf der infolge des zwischen der Vorkondensatzuführung und dem Reaktor herrschenden Druckgefälles normalerweise spontan ablaufenden Diolverdampfung sorgt, so daß der erste Reaktionsboden vollständig und gut benetzt, Spritzen und Verschmutzen der Reaktorwände jedoch vermieden wird.

Die Erfindung betrifft außerdem ein Verfahren zum vollständigen Entfernen von Produkttröpfchen aus dem vorwiegend aus Diol bestehenden Brüdenstrom des Kondensationsreaktors.


Le A 20 390-Europa

- 2 -

Unter Polyestern, Dicarbonsäuredialkylestern, Dicarbonsäuren, Diolen und Katalysatoren werden die üblicherweise verwendeten verstanden. Das Verfahren ist besonders zur Herstellung von Polyethylenterephthalat und Polybutylenterephthalat aus Terephthalsäure bzw. Terephthalsäuredimethylester und Glykol bzw. Butandiol-1,4 in Gegenwart üblicher Katalysatoren (s. R.E. Wilfong, J. of. Polym. Sc. 54, S. 385 (1961)) geeignet.

Die meisten bekannten Reaktoren für die kontinuierliche Kondensation von aus der Umesterung von Dicarbonsäuredialkylestern mit Diolen entstandenen Reaktionsgemische haben mechanisch bewegte stangen-, netz-, schaft- oder pfugscharförmig gestaltete Einbauten zur besseren Durchmischung und zur Vergrößerung der Oberfläche des Reaktionsproduktes. Es sind aber auch Vorrichtungen mit Rührorganen in Form sich drehender Scheiben sowie in Form von Doppelwellenschnecken bekannt.

Die Produktzufuhr in die meist horizontal liegenden Reaktorbehälter erfolgt in vielen Fällen von unten in eine durch fortschreitende Reaktion gegenüber dem zugeführten Vorkondensat eventuell bereits viskoser gewordene Flüssigkeitsschicht beträchtlicher Schichtdicke, so daß die Wirkungen spontaner Verdampfungsvorgänge während der Vorkondensatzufuhr in diese Reaktoren weitgehendst unterdrückt werden und somit in diesem Bereich keine besonderen Schwierigkeiten entstehen.

Le A 20 390

Diese Reaktoren sind in der Regel in mehrere Kammern unterteilt, die eine gezielte Temperatur- und Druckführung des Reaktionsablaufes gestatten, derart, daß die in den einzelnen Kammern durch fortschreitende Kondensation freigesetzten Brüdenströme in ihrer Menge den durch die Konstruktion der Reaktoren vorgegebenen Brüdenräumen angepaßt werden können, wodurch die Gasgeschwindigkeiten so gering gehalten werden, daß kaum nennenswerte Produktanteile in Form von Tröpfchen mitgerissen werden.

Es sind aber auch Verfahren bekannt, bei denen die kontinuierliche Kondensation in einfachen Bodenkolonnen durchgeführt wird. Bei derartigen Reaktionskolonnen muß auf die Einspeisung des Reaktionsvorproduktes in den Reaktor und auf den Brüdenaustrag, insbesondere jedoch auf die Abscheidung von im Brüdenstrom noch enthaltenen flüssigen Produktanteilen wesentlich mehr Sorgfalt aufgewendet werden als bei den bisher bekannten Verfahren.

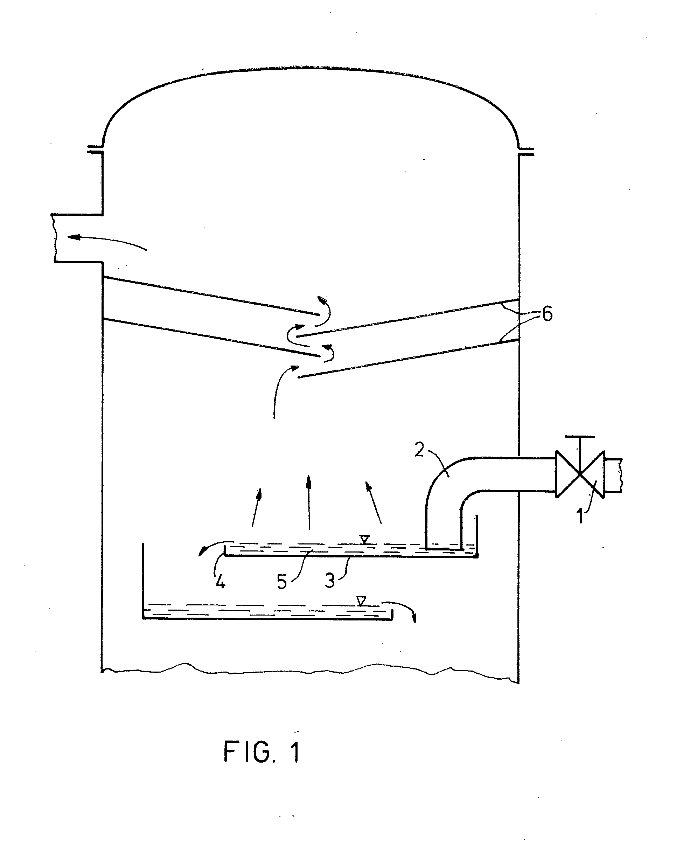

Figur 1 zeigt den Aufbau einer derartigen Bodenkolonne für die Kondensation von Polyesterprodukten.

Das Vorprodukt wird hierbei im allgemeinen über ein Drosselventil 1 und einen einfachen Rohrkrümmer 2 mit auf die Produktmenge abgestimmter Krümmung, Länge und Querschnitt auf den 1. Reaktionsboden 3 geleitet, derart, daß der aus dem Stutzen austretende Strahl in

Le A 20 390

einem Abstand von der hinteren Bodenbegrenzung, die etwa dem 10. Teil der gesamten Bodenlänge entspricht, auf den Reaktionsboden auftritt, wobei das untere Ende des Krümmers etwa bis zur Hälfte in die sich auf dem Reaktionsboden ausgebildete, durch die Höhe eines Überlaufwehres 4 vorgegebene Flüssigkeitsschicht 5 hineinragt. In der Kolonne herrscht ein Vakuum bei Drücken, die etwa 20- bis 25mal kleiner sind als der Druck vor der Drosselstelle 1. Die Reaktionsböden sind im allgemeinen beheizt. Gebräuchlich ist aber auch die Beheizung mit quer zur Strömungsrichtung des Produktes angebrachten mit Wärmeträgermedium durchströmten Rohrbündeln.

Größe und Anzahl der Reaktionsböden hängt ab von der Höhe des gewünschten Molekulargewichtes des Endproduktes. Entsprechend sind auch die Temperaturführung und die Schichtdicke auf den Kolonnenböden an die gewünschten Eigenschaften des Polyesterendproduktes angepaßt. Zu diesem Zwecke können auch noch weitere Druckstufungen in einem derartigen Kolonnenreaktor vorgesehen sein.

Infolge des großen Drucksprunges an der Drosselstelle 1 von 100 - 250 mbar auf 5 - 15 mbar werden bereits im Rohrkrümmer 2 durch die Verdampfung von 2 - 10 % des eingesetzten Produktstromes erhebliche Gasmengen freigesetzt, die mit hoher Geschwindigkeit die Flüssigkeitsschicht durchsetzen und dabei Produkt in Form klei-

Le A 20 390

ner Tröpfchen mitreißen. Diese Tröpfchen gelangen nun an die ebenfalls beheizten Reaktorwände und können somit Ursache von Produktverunreinigungen sein, wenn sie z.B. vercrakt von den Wänden abplatzen und wieder in den Produktstrom gelangen.

Ein großer Teil der Tröpfchen wird von den Brüden mitgerissen. Um größere Produktverluste zu vermeiden, werden sie im oberen Teil des Reaktors von Tropfenabscheidern 6, z.B. schräggestellten Blechen z.T. abgeschieden und gelangen so in den Produktstrom zurück.

Die Neigung solcher Prallbleche sowie der von ihnen freigelassene Strömungsquerschnitt hängen ab von den Brüdenmengen und der Beladung mit Produkttröpfchen.

Bei den bisher bekannten Bodenkolonnen gelang es trotz erheblicher Anstrengungen bisher nicht, den heutigen Anforderungen an lange Betriebsdauer ($> 6$ Monate) zu genügen, da immer noch zu viele Spritzer entstehen, die zu beträchtlichen Produktverunreinigungen führen und da immer noch zu viel Produkt mit den Brüden aus dem Reaktor ausgetragen wird, das in nachgeschalteten Wäschern niedergeschlagen werden muß und dort neben dem Mengenverlust zu Ansätzen und Verstopfungen in den Zuleitungen, den Wäschern und deren Nebenaggregaten führen, so daß periodische, zeitaufwendige und teuere Reinigungszyklen notwendig werden.

Es war also die Aufgabe gestellt, den Eintrag des Vorproduktes so zu gestalten, daß eine Verunreinigung der
Reaktorwände durch infolge der spontanen Diolausdampfung aus der Flüssigkeitsschicht abgeschleuderten Produkttropfen weitgehendst vermieden wird.

Es war weiter die Aufgabe gestellt, die Abtrennung von
Tröpfchen, die von den auf den Reaktionsböden infolge
fortschreitender Reaktion freigesetzten Brüden mitgerissen werden, aus dem den Reaktor verlassenden Brüdenstrom derart zu verbessern, daß es weder zu einer
Verunreinigung des Reaktors im Abzugsbereich noch der
diesem nachgeschalteten Neben- und Hilfsaggregaten
kommt, so daß es möglich sein sollte, bei verbesserter Polyesterendproduktqualität die Standzeit des Kolonnenreaktors und damit auch die Wirtschaftlichkeit des
Verfahrens um ein beträchtliches zu erhöhen.

Es wurde nun gefunden, daß eine Verunreinigung des Reaktors durch Tropfenflug und damit auch des Produktes
weitgehend dadurch vermieden werden kann, daß die spontane Entspannungsverdampfung des Vorkondensates infolge des zwischen Vorkondensatorreaktor und Kolonnenreaktor herrschenden Druckgefälles vor Einleitung auf
den 1. Boden des Kolonnenreaktors in einem geschlossenen Raum, dem sogenannten Eintrittskasten erfolgt und
daß in einem funktionell davon abgetrennten Bereich,
der sogenannten Ringkammer anschließend eine Separierung der Flüssigkeitskomponente von der Gaskomponente
durch Zentrifugalkraft erfolgt.

Le A 20 390

Es wurde weiter gefunden, daß eine wirksame Abscheidung von Tröpfchen aus dem Brüdenstrom mit Hilfe eines Drallabscheiders durchgeführt werden kann.

Die Entspannungsverdampfung des Vorkondensates kann erfindungsgemäß mit einem Zyklon durchgeführt werden, der aus einem Eintrittskasten und einem Abscheiderteil besteht.

Zyklone benutzt man auch nach DE-OS 2 361 236 bei der Entspannungsverdampfung feststoffhaltiger Abwässer.

Bei der Anwendung für die hier gestellte Aufgabe erzielt man jedoch mit solchen Apparaten keinen Erfolg, weil infolge der großen Viskosität des Vorproduktes die Innenwände nur teilweise benetzt sind und sich dadurch Ansätze an den nicht benetzten Wänden ergeben.

Zyklone arbeiten aber bei Anwendung viskoser und reagierender Flüssigkeiten überraschenderweise sehr gut, wenn der Abscheideraum nur noch aus der Ringkammer mit schräger Ablauffläche und mit tangential angesetztem Eintrittskasten besteht und wenn der Abflußkonus der Flüssigkeit zum Austritt an die schräge Ablauffläche ohne den normalen Abscheideraum direkt anschließt.

Der Querschnitt des Eintrittskastens ist, wie bekannt, gegenüber dem der in den Eintrittskasten einmündenden Produktzuleitung oder Drosselstelle vorzugsweise auf das 8- bis 20-fache erweitert. Zweckmäßigerweise wird die Erweiterung stoßartig ausgeführt. Der Eintrittskasten verengt sich vor Eintritt in die zylindrische

Le A 20 390

Ringkammer in der Breite kontinuierlich und erweitert sich in der Höhe kontinuierlich derart, daß im allgemeinen die Querschnittsfläche konstant bleibt.

Der Eintrittskasten ist im allgemeinen so dimensioniert, daß das Verhältnis von Außenlänge zu seiner größten Höhe vorzugsweise im Bereich von 2,0 bis 3,0 liegt.

Der Eintrittskasten wird derart an die Ringabscheidekammer angesetzt, daß der Ansatz der Außenfläche des Eintrittskastens tangential erfolgt.

Anstelle von planaren Seitenflächen kann der Eintrittskasten, wie bereits in DE-AS 23 61 236 beschrieben, auch gekrümmte Seitenflächen besitzen, wobei der Krümmungsradius des Eintrittskastens 2 mal größer ist als der Ringkammerradius ist.

Im Eintrittskasten erfolgt fast spontan eine adiabatische Entspannung, wobei das Verhältnis von entstehendem Dampfvolumen zum Flüssigkeitsvolumen, ähnlich wie bei der in DE-AS 23 61 236 beschriebenen Entspannungsverdampfung, im Bereich von 1000:1 liegt.

Es ist auch ein einfacher Zyklon bekannt (DE-OS 22 32 293) dem ein längeres Eintrittsrohr größerer Querschnittsfläche vorgeschaltet ist und in welches die zu entspannende Flüssigkeit mit plötzlicher Erweiterung tangential eingeleitet wird.

Le A 20 390

Bei diesem Verfahren ist die Entspannung durch Drallströmung jedoch bewußt verzögert. Dadurch entspannen einige Teilchen bei höherer, andere wieder bei tieferer Temperatur.

Im Gegensatz zu den in DE-AS 23 61 236 beschriebenen Verfahren wird aber der eintretende Produktstrahl, vermutlich wegen der höheren Viskosität, nicht vollständig in Tropfen zerlegt. Eine größere Menge, bis etwa 30 %, bleibt als kompakter Strahl im Kern erhalten. Dort, wo der Strahl auftrifft, entstehen rein mechanisch noch einmal größere Spritzer. Wenn die Auftreffstelle in der Ringkammer liegt, gelangen solche Spritzer, weil sie relativ groß sind und von der Gasströmung nicht mehr beeinflußt werden, über das Tauchrohr in den Reaktor. Um dies zu vermeiden, erwies es sich als vorteilhaft, den zusammenhängen Reststrahl nach unten geneigt unter flachem Winkel entlang einer Wurfparabel, an die Außenwand des Eintrittskastens zu leiten.

Um die infolge der plötzlichen Erweiterung im Eintrittskasten nahezu spontan ablaufende Verdampfung nicht zu behindern, darf der kompakte Strahlkern zunächst im Eintrittskasten keine Wandberührung haben. Er darf erst in der zweiten Hälfte, vorzugsweise im letzten Drittel des Eintrittskastens auf die Wand auftreffen. Dabei wird im Eintrittskasten ein Druckanstieg verwirklicht, der größer oder gleich der Druckabsenkung im Kolonnenreaktor ist.

Le A 20 390

Die im Eintrittskasten durch den infolge der spontanen Verdampfung bewirkten weitgehenden Zerfall des Produktstrahls gebildeten Tröpfchen fließen von den Wänden des Eintrittskastens zusammen mit dem an der Auftreffstelle des Restkernes gebildeten Flüssigkeitsfilms ab und über die in einem Winkel von vorzugsweise zwischen 3 und 40° zur Horizontalen hin geneigten Boden der Eintrittskammer in den Abscheideteil.

Der Abscheideteil besteht also nur noch aus einer zylindrischen Ringkammer mit der Höhe des Eintrittskastens, die mit der darunterliegenden Ablauffläche direkt verbunden ist.

In der Ringkammer erfolgt die Trennung der bei der Verdampfung gebildeten gasförmigen Phase von der flüssigen Phase durch die auf die Flüssigkeit beim Umlauf in der Ringkammer wirkende Zentrifugalkraft.

Der Durchmesser der Ringkammer richtet sich neben des räumlich im Reaktor zur Verfügung stehenden Platzes vor allem nach dem im Eintrittskasten durch die Verdampfung freigesetzten Gasmenge. Diese wiederum hängt ab von dem zwischen Produktzuleitung vor der Drosselstelle und dem Eintrittskasten herrschenden Druckgefälle, von der Temperatur des eintretenden Produktstrahles und vor allem vom Kondensationsgrad des Polyestervorproduktes und muß von Fall zu Fall rechnerisch abgeschätzt bzw. durch Versuche ermittelt werden.

Le A 20 390

Die an die Ringkammer anschließende Ablauffläche sollte einen Winkel zur Horizontalen von vorzugsweise zwischen 10° und 45° bilden. Die Neigung der Ablauffläche ist abhängig von der Apparategröße, dem Durchsatz und der Viskosität der flüssigen Komponente und wird durch Modellversuche ermittelt.

Der Flüssigkeitsaustritt ist so dimensioniert, daß Rückstau auf der Ablauffläche mit Sicherheit vermieden wird. Der Flüssigkeitsaustritt taucht in eine am Reaktionsboden befestigte Ablauftasse ein, die verhindern soll, daß Gas an dieser Stelle austritt. Die Tiefe der Tasse richtet sich nach dem Druckverlust des Zyklons, der vorzugsweise zwischen 0,5 und 2,5 mbar liegt.

Das Verhältnis des Tauchrohrdurchmessers zum Ringkammerdurchmesser liegt zwischen 1:3 und 1:6. Das Verhältnis der Einstecklänge zum Durchmesser des Tauchrohres beträgt 0,5 bis 1,0.

Der Zyklon verfügt über eine zwischen Außenwand und Tauchrohr am Deckel angebrachte umlaufende Abrißkante und über einen am Tauchrohr angebrachten Spritzkragen, um zu verhindern, daß Flüssigkeit, die am Deckel und am Tauchrohr entlangkriecht, in das Tauchrohr zur Brüdenableitung gelangt. Über dem Flüssigkeitsaustritt ist eine kegelige Abschirmhaube angebracht.

Der Zyklon kann außerhalb des Reaktors aufgestellt sein. Die aus dem Zyklon ablaufende Flüssigkeit wird dann über

Le A 20 390

- 12 -

ein Rohr in den Reaktor zurückgeführt. Dann aber ist es notwendig, diesen Zyklon mit einem Heizmantel zu umgeben zur Temperierung, denn das ihm zugeleitete Vorkondensat kann Temperaturen besitzen zwischen 470 und 560 K. Da jedoch die Ausstattung des Zyklons mit einem Heizmantel aufwendig und teuer ist, hat es sich als vorteilhaft erwiesen, den Zyklon im Reaktor zu integrieren, unmittelbar oberhalb des ersten Reaktionsbodens. Die Beheizung des Zyklons entfällt somit.

Im Gasraum des Reaktors befinden sich im allgemeinen noch Produkttröpfchen, die sich gebildet haben bei der Verdampfung der durch fortschreitende Reaktion auf den Kolonnenböden gebildeten Diols sowie beim Übergang des Produktes von einem Reaktionsboden zum anderen. Diese Tröpfchen können sich, wenn der Zyklon sich im Inneren des Reaktors befindet, auf dessen Deckel absetzen. Um dies zu vermeiden, hat es sich als vorteilhaft erwiesen, den Deckel der Ringkammer schräg anzuordnen derart, daß der Winkel zur Horizontalen zwischen 2 und 30°, vorzugsweise jedoch zwischen 5 und 10° liegt. Bei dieser Neigung wird die Abscheideleistung noch nicht spürbar beeinträchtigt. Auf diese Weise gelingt es, durch Anwendung des Zyklons die früher vorhandenen durch spontane Verdampfung im Bereich des Produkteintrittsstutzens gebildeten Tröpfchen vollständig aus dem Brüdenstrom fernzuhalten.

Der Drallapparat zur Abscheidung von Produkttröpfchen aus den Brüden besteht aus einem Leitapparat mit ra-

Le A 20 390

dialen Schaufeln und einem nachfolgenden zylindrischen Drallrohr, in dem die Trennung der Tröpfchen von Gas durch Zentrifugalkraft erfolgt.

An Ende des Drallabscheiders wird die abgetrennte Flüssigkeit mittels Schälkragen zurückgehalten und über ein Abflußrohr mit Überlauftasse unter Ausnutzung der Höhendifferenz auf den 1. Boden zurückgeführt.

Der Drallabscheider wird oberhalb des Einlaufzyklons und des 1. Kolonnenbodens vorzugsweise mit leichter Neigung gegenüber der Horizontalen angebracht, um einen besseren Abfluß der im Drallrohr abgeschiedenen flüssigen Komponente zu gewährleisten.

Der innere Durchmesser des Leitapparates ist 1,1- bis 2mal größer als der Durchmesser des angesetzten zylindrischen Drallrohres. Die Länge des Drallrohres ist 2- bis 3mal größer als dessen Durchmesser.

Der Übergang vom inneren Durchmesser des Leitapparates zum kleineren Durchmesser des angesetzten Drallrohres erfolgt konisch mit einem Gesamtwinkel zwischen 30 und 60°.

Der Leitapparat schafft eine Umfangsgeschwindigkeit der Drallströmung, die auf dem Durchmesser des Drallrohres zwischen 0,5- und 1,5mal so groß ist wie die mittlere Durchflußgeschwindigkeit im Drallrohr.

Le A 20 390

Im Drallrohr erfolgt die Trennung der flüssigen von der gasförmigen Phase durch Zentrifugalkrafteinwirkung. Der Durchmesser des Drallrohres richtet sich nach der Menge der anfallenden Brüden und der Größe des zugelassenen Druckverlustes sowie nach der Größe der abzuscheidenden Tropfen und muß von Fall zu Fall diesen Bedingungen angepaßt werden. Der Druckverlust beträgt normal 0,5 - 2,0 mbar.

Am hinteren Ende des Drahllrohres befindet sich der Schälkragen. Zur einwandfreien Ausschleusung der abgeschiedenen Produkttröpfchen, befindet sich unmittelbar vor dem Schälkragen unterhalb des Drallrohres ein Abscheidekasten, in den durch mehrere Bohrungen das Produkt vom Brüdenrohr ablaufen kann, um dann über ein Ablaufrohr mit angesetzter Ablauftasse auf den 1. Reaktionsboden der Kolonne zurückgeleitet zu werden. Das Ablaufrohr ist vorzugsweise so lang zu dimensionieren, daß die Ablauftasse sich unmittelbar über der Flüssigkeitsschicht des 1. Bodens befindet. Die Ablauftasse hat mehrere kleine Entlastungsbohrungen, so daß sie während eines Reaktorstillstandes automatisch entleert wird. Sie sind jedoch wiederum so klein, daß während des Betriebes die Tasse gefüllt bleibt.

Es besteht jedoch auch die Möglichkeit, die im Drallabscheider abgeschiedene Produktflüssigkeit in den Eintrittskasten des Zyklons zurückzuführen, und zwar an die Stelle, an der sich der Eintrittskasten gegenüber der Produktzuleitung sprunghaft erweitert. Damit aber Produkt aus dem Drallabscheider dorthin abgeleitet werden kann, ist es notwendig, daß an dieser Stelle des Eintrittskastens ein Unterdruck gegenüber dem Reaktorraum herrscht, zusätzlich erhöht um den Druckabfall des Drallabscheiders. Dies erreicht man durch geeignete Gestaltung des Eintrittskastens, derart, daß sich dieser in mehreren Stufen auf das 5- bis 30-fache gegenüber der Produktzuleitung erweitert. Bei geeigneter Dimensionierung dieser Stufen erfolgt von der ersten sprunghaften Erweiterung des Eintrittskastens unmittelbar hinter der Produktzuleitung bis zur Eintrittsöffnung in den Zyklon ein Druckanstieg, der größer ist als der durch die Gasströmung im Zyklon und im Drallabscheider bewirkte Druckabfall.

Es hat sich als vorteilhaft erwiesen, die erste Stufung gegenüber der Produktzuleitung auf das 2- bis 4-fache zu erweitern und die Querschnittsflächen aller folgenden Stufen jeweils um den Faktor 2 bis 8 gegenüber den vorgeschalteten Stufen zu vergrößern. Es hat sich außerdem als zweckmäßig herausgestellt, die letzte Stufung mit rechteckigem Querschnitt auszuführen, derart, daß von Beginn der Stufung bis zum Eintritt in den Zyklon die Breite der Stufe kontinuierlich abnimmt, die Höhe dagegen kontinuierlich zunimmt.

Die der letzten Stufe vorgeschalteten Stufungen des Eintrittskastens können zylindrischen Querschnitt besitzen.

Le A 20 390

0043502

Die Länge einer Stufe ist so zu wählen, daß sie das 2-
bis 5-fache ihres Durchmessers hat.

Die Länge der letzten Stufe mit rechteckigem Querschnitt
ist etwa 1,5- bis 5mal so groß wie ihre größte Höhe.

Bei einer derartigen Dimensionierung gelingt es, das
im Drallabscheider abgeschiedene Produkt ohne Schwierigkeiten in den Eintrittskasten zu leiten und damit
in den Vorproduktstrom einzumischen.

Bei einer derartigen Anordnung werden mit dem abgeschiedenen Produkt etwa 5 - 10 % der Brüden aus dem Drallabscheider in den Zyklon zurückgeführt. Diese zurückgeführte Menge stört die Gasströmung im Zyklon nicht;
die Wirkung des Zyklons wird vielmehr hierdurch verstärkt.

Mit Zyklon und Drallabscheider gelingt eine optimale
Lösung der gestellten Aufgaben bei gleichzeitig sparsamtem Einsatz aller Mittel und einem Minimum an Aufwand.

Das erfindungsgemäße Verfahren sei anhand der Figuren
2 bis 5 nährer erläutert:

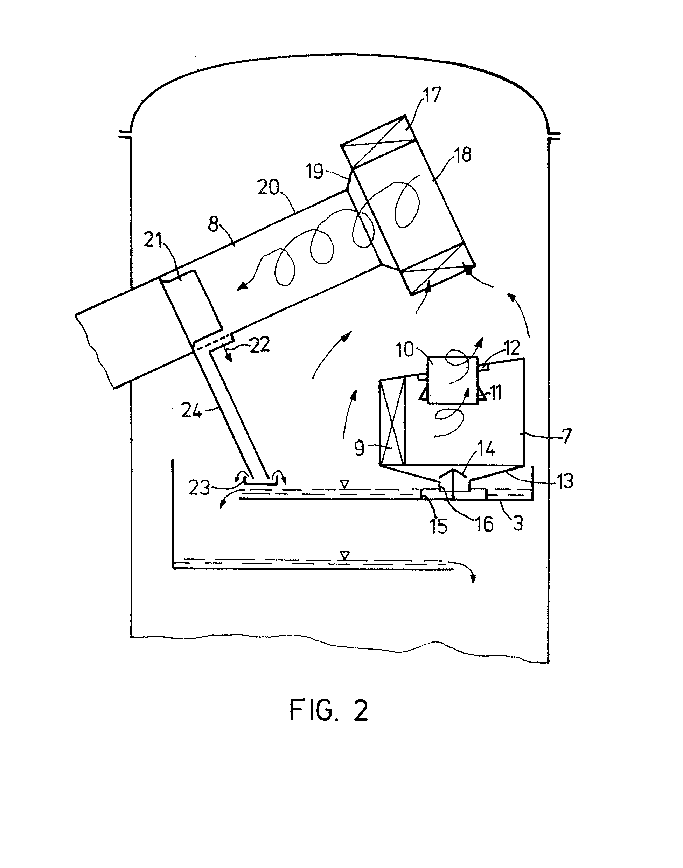

Figur 2 zeigt die Anordnung des Einlaufzyklons und des
Drallabscheiders im oberen Teil einer Bodenkolonne mit
dem obersten Boden 3, dem darauf angebrachten Zyklon 7

Le A 20 390

und dem darüber befindlichen Drallabscheider 8.

9 bezeichnet die Zyklonringkammer mit Tauchrohr 10 und dem daran seitlich angebrachten Spritzkragen 11 sowie der Abrißkante 12.

13 bezeichnet die schräge Ablauffläche mit Abschirmkegel 14 und den durch eine Ablauftasse 15 geschützten Produktaustritt 16.

Der Drallabscheider 8 besteht aus einem mit Schaufeln 17 bestückten Leitapparat 18, der über ein kurzes konisches Rohrstück 19 mit dem Drallrohr 20 verbunden ist. Am anderen Ende befindet sich der Schälkragen 21, der Abscheidekasten 22 mit dem wiederum mit einer Ablauftasse 23 verbundenen Ablaufrohr 24.

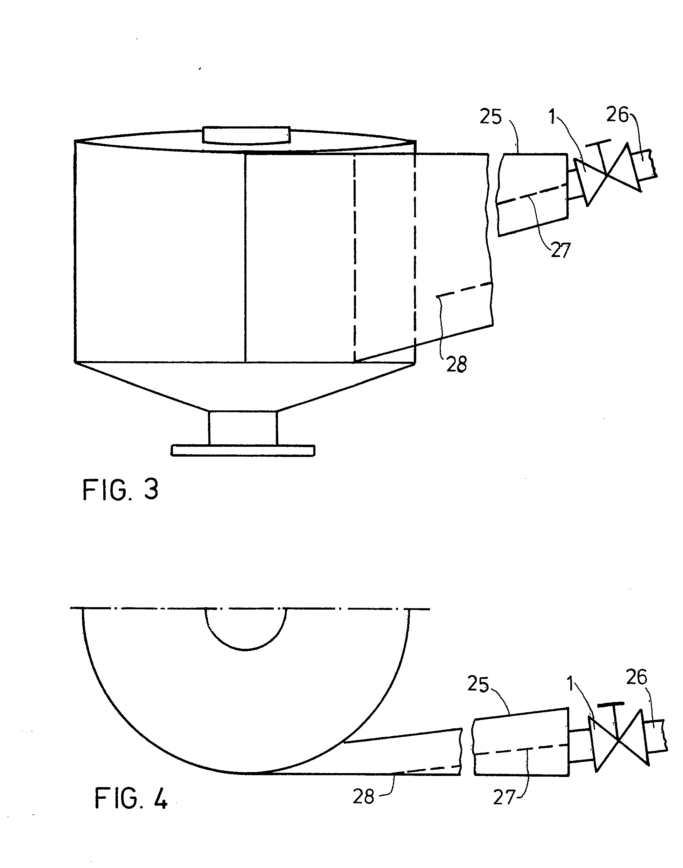

Figur 3 zeigt eine Seitenansicht des Zyklons mit verkürzt dargestelltem Einlaufkanal 25, dem Zuleitungsrohr 26 einschließlich Drosselorgan 1.

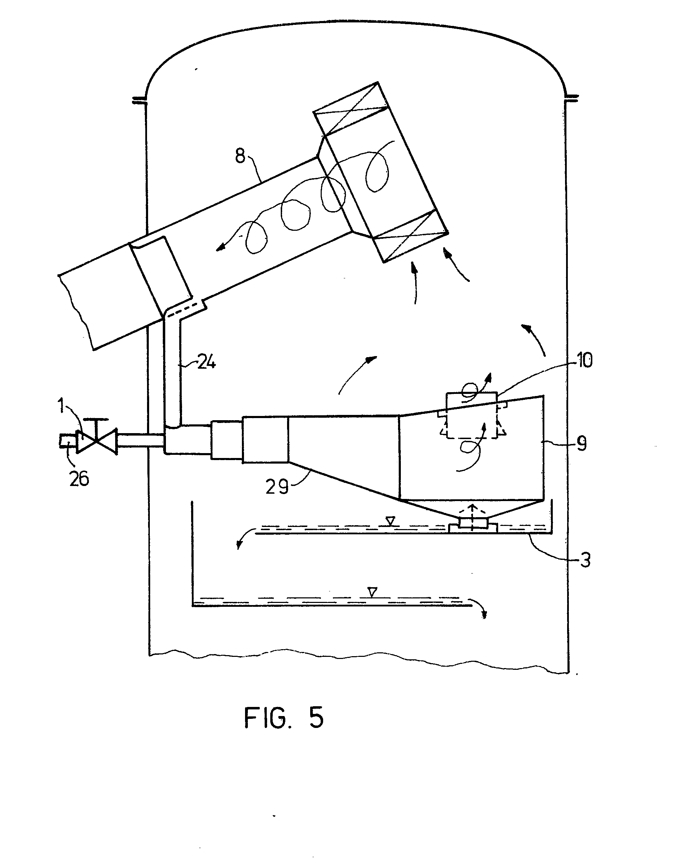

Figur 4 zeigt eine Aufsicht. In den Figuren 3 und 4 ist jeweils die Richtung des Produktstrahl 27 und dessen Auftreffstelle 28 mit eingezeichnet.

Figur 5 zeigt die Anordnung von Drallabscheider und Zyklon bei Rückführung des abgeschiedenen Produktes in den in mehreren Stufen erweiterten Eintrittskasten des Zyklons.

0043502

26 bezeichnet hierbei die Produktzuleitung mit Drosselorgan 1 vom vorgeschalteten Vorkondensatreaktor, 29 bezeichnet den sich stufenweise erweiternden Eintrittskasten, der tangential an der Ringkammer 9 des Zyklons
mit dem Tauchrohr 10 sitzt.

3 bezeichnet wieder den 1. Boden des Reaktors, 8 den
Drallabscheider und 24 das Abflußrohr.

Le A 20 390

Patentansprüche

1. Verfahren zur Herstellung von Polyestern durch Eintragen von aus einer Umesterung von Dicarbonsäuredialkylester mit Diolen oder aus einer Veresterung von Dicarbonsäuren mit Diolen, gegebenenfalls unter Zusatz von Katalysatoren, stammenden Vorkondensaten auf den 1. Boden eines Kolonnenreaktors und weitere Kondensation im Kolonnenreaktor, dadurch gekennzeichnet, daß die spontane Entspannungsverdampfung des Vorkondensates infolge des zwischen Vorkondensatreaktor und Kolonnenreaktor herrschenden Druckgefälles vor Einleitung auf den 1. Boden des Kolonnenreaktors in einem geschlossenen Raum, dem sogenannten Eintrittskasten erfolgt und daß in einem funktionell davon abgetrennten Bereich, der sogenannten Ringkammer anschließend eine Separierung der Flüssigkeitskomponente von der Gaskomponente durch Zentrifugalkraft erfolgt.

2. Verfahren nach Anspruch 1, dadurch gekennzeichnet, daß der in den Eintrittskasten eintretende Restkern des Produktstrahles schräg gegen eine Außenfläche des Eintrittskastens gerichtet wird, derart, daß die Auftreffstelle in der zweiten Hälfte, bevorzugt im letzten Drittel der Außenwand liegt, und daß im Eintrittskasten ein Druckanstieg verwirklicht wird, der größer oder gleich der Druckabsenkung im Kolonnenreaktor ist.

Le A 20 390

3. Verfahren gemäß Anspruch 1, dadurch gekennzeichnet, daß die Entspannungsverdampfung in einem Zyklon durchgeführt wird, der in an sich bekannter Weise einen tangential an die Ringkammer angesetzten Eintrittskasten aufweist, der in seinem Querschnitt gegenüber der einmündenden Produktleitung auf das 5- bis 30-fache erweitert ist und sich vor der Einmündung in die Ringkammer in der Breite kontinuierlich verengt und in der Höhe kontinuierlich erweitert und daß seine Außenlänge 1,5- bis 5mal so groß ist wie seine Höhe,

daß der Querschnitt des zentralen Tauchrohrs im Deckel des Zyklons 0,75- bis 1,5mal so groß ist wie der Endquerschnitt des Eintrittskastens,

daß der Durchmesser der Ringkammer 3- bis 5mal so groß ist wie der Tauchrohrdurchmesser und

daß das Verhältnis von Einstecktiefe des Tauchrohres im Zyklon zu dessen Durchmesser 1 bis 1,5 beträgt,

daß der Zyklon mit einer Abrißkante, mit einem am Tauchrohr befestigten Spritzkragen, mit einer Abschirmhaube über dem Abflußrohr versehen ist und

daß das Abflußrohr mit einer Ablauftasse umgeben ist,

Le A 20 390

daß der Deckel der Ringkammer geneigt ist und

daß der Neigungswinkel gegenüber der Horizontalen zwischen 0 und 30° liegt,

daß der Zyklon sich im Inneren des Kolonnenreaktors befindet.

4. Verfahren gemäß Anspruch 1, dadurch gekennzeichnet, daß die während der kontinuierlichen Kondensation auf den Böden eines Kolonnenreaktors entstehenden Brüden aus einem Diol unmittelbar vor Austritt aus dem Reaktor von mitgerissenen Produkttröpfchen durch Zentrifugalkraft gereinigt werden und daß diese abgeschiedenen flüssigen Produktteile auf einen der Böden des Reaktors zurückgeführt werden.

5. Verfahren gemäß Anspruch 4, dadurch gekennzeichnet, daß die Abscheidung der Produkttropfen in einem Drallabscheider erfolgt, der aus einem radialen Leitapparat, einem konischen Übergangsstück und einem zylindrischen Drallrohr besteht,

daß der Leitapparat mit mindestens 4 geraden oder gebogenen Schaufeln bestückt ist,

daß der Durchmesser des zylindrischen Drallrohres 0,5- bis 0,8-fach so groß ist wie der innere Durchmesser des Leitapparates und dessen Länge 1- bis

Le A 20 390

3mal so groß ist wie dessen Durchmesser und an dessen Ende sich ein Abschälkragen befindet, dessen Durchmesser etwa 0,9- bis 0,7mal so groß ist wie der Durchmesser des Drallrohres,

daß unmittelbar vor dem Abschälkragen an der Unterseite des Drallrohres Bohrungen angebracht sind,

daß unterhalb dieser Bohrungen sich ein Abscheidekasten befindet, an dem das Produktabflußrohr angebracht ist.

6. Verfahren gemäß Anspruch 5, dadurch gekennzeichnet, daß die im Drallabscheider abgeschiedenen Polymertropfen in den Entspannungskasten des Zyklons zurückgeführt werden.

7. Verfahren gemäß Anspruch 6, dadurch gekennzeichnet, daß der Eintrittskasten sich in mehreren Stufungen auf das 5- bis 30-fache über der einmündenden Produktleitung erweitert, derart, daß die 1. Stufe um das 2- bis 4-fache erweitert ist und die Fläche der nachfolgenden Stufen jeweils um das 2- bis 8-fache größer als die Querschnittsflächen der vorgeschalteten Stufen ist, wobei mit Ausnahme der letzten Stufe alle anderen Abschnitte des Eintrittskastens zylindrischen Querschnitt haben können, die letzte Stufe jedoch rechteckigen Querschnitt hat, und

daß die Länge der Stufungen mit zylindrischem Querschnitt etwa 2- bis 5mal so groß ist wie ihr Durchmesser, und

daß die letzte Stufe sich vor Eintritt in die Ringkammer in der Breite kontinuierlich erweitert, und

daß diese letzte Stufe eine Länge besitzt, die 1,5- bis 5mal so groß ist wie ihre größte Höhe, und

daß das Abflußrohr der Drallabscheider unmittelbar nach der Einmündung der Produktleitung in den Eintrittskasten seitlich an diesen angesetzt ist.

FIG. 1

FIG. 2

FIG. 3

FIG. 4

FIG. 5